(19) **Europäisches Patentamt**
**European Patent Office**
**Office européen des brevets**

(11) **EP 2 307 856 B1**

(12) **FASCICULE DE BREVET EUROPEEN**

(45) Date de publication et mention
de la délivrance du brevet:
**20.08.2014 Bulletin 2014/34**

(51) Int Cl.:
***G01D 5/26*** (2006.01)      ***G01D 5/353*** (2006.01)

(21) Numéro de dépôt: **09779939.9**

(22) Date de dépôt: **25.06.2009**

(86) Numéro de dépôt international:
**PCT/EP2009/057948**

(87) Numéro de publication internationale:
**WO 2010/009951 (28.01.2010 Gazette 2010/04)**

(54) **CAPTEUR A FIBRE OPTIQUE AUTO-REFERENCE A DIFFUSION BRILLOUIN STIMULEE**

GLASFASERSENSOR MIT SELBSTREFERENZ MIT STIMULIERTER BRILLOUIN-STREUUNG

SELF-REFERENCED OPTICAL FIBRE SENSOR WITH STIMULATED BRILLOUIN SCATTERING

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.07.2008 FR 0804253**

(43) Date de publication de la demande:
**13.04.2011 Bulletin 2011/15**

(73) Titulaire: **THALES**
**92200 Neuilly-sur-Seine (FR)**

(72) Inventeurs:
• **MOLIN, Stéphanie**
**F-91210 Draveil (FR)**
• **DOLFI, Daniel**
**F-91400 Orsay (FR)**
• **HUIGNARD, Jean-Pierre**
**F-75013 Paris (FR)**
• **POCHOLLE, Jean-Paul**
**F-91290 La Norville (FR)**

• **DOISY, Martine**
**F-06130 Plascassier (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
WO-A-2006/027613      DE-C1- 19 950 880
US-A1- 2003 094 281      US-A1- 2008 084 914

• **TORSTEN GOGOLLA ET AL: "Distributed Beat Length Measurement in Single-Mode Optical Fibers Using Stimulated Brillouin-Scattering and Frequency-Domain Analysis" JOURNAL OF LIGHTWAVE TECHNOLOGY, IEEE SERVICE CENTER, NEW YORK, NY, US, vol. 18, no. 3, 1 mars 2000 (2000-03-01), XP011029669 ISSN: 0733-8724**

**Description**

Le domaine de l'invention est celui des capteurs à fibre optique permettant la mesure de grandeurs physiques. Les capteurs à base de fibres optiques sont étudiés depuis près de trente ans. On se reportera sur ce sujet, par exemple, à la publication de C. Menadier, C.Kissenger, et H. Adkins, "The photonic sensor", Instrum. Control Syst. Vol.40, 114 (1967). Ils bénéficient des avantages des fibres optiques, qui, outre leur faible poids, encombrement, coût et insensibilité aux perturbations électromagnétiques, présentent de faibles pertes, une bande passante élevée et sont propices aux techniques de multiplexage et à la mise en oeuvre d'amplificateurs ou de capteurs distribués.

Les applications des capteurs à fibre optique sont diverses. On citera la publication de B. Culshaw, "Optical fiber sensor technologies: opportunities and -perhaps- pitfalls", J. Ligth. Tech. Vol. 22, No. 1, 39 (2004). Les plus fréquentes concernent la détection de contrainte, de température et de pression mais elles existent aussi en détection de courant/tension, de déplacement, de torsion, d'accélération, de gaz,.... Les techniques utilisées sont très variées, les plus activement étudiées concernent :

- les méthodes interférométriques (voir P. Nash, "Review of interferometric optical fiber hydrophone technology", IEE Proc. Radar Sonar Navig. Vol. 143, No. 3 (1996)), et en particulier :

  ○ les gyroscopes à fibre (Voir, à ce sujet, V. Vali et R. W. Shorthill, "Fiber ring interferometer", Appl. Opt. Vol.15, No. 5, 1099 (1976)).

- les techniques de rétro-diffusion comme les diffusions Raman, Brillouin ou Rayleigh. On se reportera, en particuüer, à L. Thévenaz et al., "Monitoring of large structures using distributed Brillouin fiber sensing", proceedings of the 13th international conf on optical fiber sensors (OFS-13), Korea, SPIE Vol. 3746, 345 (1999). Près de la moitié des capteurs fibrés actuellement à l'étude mettent en oeuvre des réseaux de Bragg (S.W. James et al. « Simultaneous independent temperature and strain measurement using in-fiber Bragg grating sensors », Elect. Lett. 32 (12) 1133 (1996)). En particulier, l'utilisation de capteurs actifs à lasers à base de réseaux de Bragg se répand. Il s'agit soit de lasers « DBR » pour Distributed Bragg Reflector (voir D. Kersey et al., « Fiber Grating Sensors », J. Light. Techn. Vol. 15, No. 8 (1997), soit de lasers DFB pour Distributed FeedBack ( voir J. Hill et al., "DFB fibre-laser sensor developments", OFS-17 Proc. SPIE Vol. 5855 p.904 et le brevet US 8,844,927 intitulé "Optical Fiber Distributed FeedBack Laser" (1998)). La pureté spectrale de ces lasers permet un gain important en sensibilité par rapport à des dispositifs à réseaux de Bragg passifs.

Dans le cas des hydrophones à fibre à réseau de Bragg, la grandeur à mesurer est une contrainte appliquée au capteur. La sensibilité requise est telle que, quelque soit le type de réseau fibré utilisé (DBR, DFB ou Bragg passif), le système d'interrogation est complexe. En effet, la contrainte sur le capteur induit un déphasage sur l'onde optique qui s'y propage. La mesure de ce déphasage nécessite la comparaison de la phase du signal d'intérêt avec une référence. Parmi les méthodes utilisées, on distingue principalement deux solutions techniques pour obtenir une onde de référence. La première solution consiste à utiliser une onde de référence provenant d'un second capteur similaire mais isolé de la perturbation. Cette méthode est décrite dans C. Sun et al. "Serially multiplexed dual-point fiber-optic acoustic emission sensor", J. Light. Techn. Vol. 22, No. 2 (2004). La deuxième solution consiste à séparer le signal d'intérêt en deux bras de chemins optiques très différents et à réaliser des interférences entre ces deux bras ; dans ce cas, l'onde de référence est une copie retardée de l'onde signal. On se reportera la publication de. S. Abad et al., "Interrogation of wavelength multiplexed fiber Bragg gratings using spectral filtering and amplitude-to-phase optical conversion", J. of Ligth. Techn. Vol. 21, No. 1 (2003) pour toutes informations sur cette seconde méthode.

L'utilisation de capteurs actifs émettant deux ondes optiques de fréquence différente est une solution envisageable pour s'affranchir de bancs interférométriques ou de capteur additionnel. Les DFB-FL (Distributed FeedBack Fiber Laser) oscillant sur deux états de polarisation ou deux modes de propagation transverses ou longitudinaux ont d'ores et déjà fait l'objet de brevets et de publications. On citera les brevets US 5,844,927 Optoplan (Norvège) 1998 « Optical fiber DFB Laser », US 6,885,784 Vetco Gray Controls Limilted (UK) 2005 « Anisotropic DFB fiber laser sensor » et US 6,630,658 ABB Research Ltd (CH) 2003 « Fiber laser pressure sensor » et la publication de Kumar et al., « Studies on a few-mode fiber-optic strain sensor based on LP01-LP02 mode interference », J. Ligth. Techn. Vol. 19, No. 3 (2001). Partant de ces principes, des architectures d'hydrophones à laser à fibre DFB ont été proposées. On en trouvera le détail dans les publications de P.E. Bagnoli et al., « Development of an erbium-doped fibre laser as a deep-sea hydrophone », J. of Optics A : Pure Appl. Opt. 8 (2006), de D.J. Hill et al., "A fiber laser hydrophone array", SPIE Conf on Fiber Optic Sensor Technology and Applications Vol. 3860, 55 (1999) ou de S. Foster et al., « Ultra thin fiber laser hydrophone research through government-industry collaboration » OFS 2005-2006.

Une des limitations des systèmes actuels d'hydrophones à laser à fibre est l'influence de la pression statique sur le fonctionnement laser. Sous la pression de l'eau, soit les cavités n'émettent plus, soit leur longueurs d'onde d'émission sont modifiées au point d'altérer le fonctionnement du système. En effet, la pression de l'eau croit environ d'un bar tous les dix mètres. Or ces systèmes sont destinés à des utilisations sur les fonds sous-marins, à des profondeurs de l'ordre de 100 à 400 mètres. La pression statique modifie la longueur de la cavité laser et provoque la translation de la longueur d'onde d'émission de plusieurs nanomètres, environ 3 nanomètres à 400 mètres de profondeur. Dans le cas d'architectures multiplexées en longueur d'onde par exemple, la pression statique est une limite directe de l'espacement entre deux longueurs d'onde, et réduit par conséquent le nombre maximal de capteurs qu'il est possible de disposer en série sur une seule fibre. Des solutions existent pour pallier à ce problème. Il est possible, soit de mesurer la pression statique, puis d'en tenir compte lors du traitement des données, soit de la compenser. La première méthode est lourde et limite la sensibilité du système. La seconde méthode nécessite des dispositifs mécaniques et piézoélectriques élaborés. Les architectures proposées restent encore complexes.

L'objet de l'invention est de mettre en oeuvre des capteurs actifs fibrés dits « auto-référencés » à réseaux de Bragg mettant en oeuvre la diffusion Brillouin stimulée. On entend par capteur « auto-référencé » tout capteur générant deux signaux de mesure portant l'information à mesurer. Dans le cas présent, les signaux sont deux ondes optiques émises à des fréquences optiques différentes. La mesure différentielle des variations entre les fréquences des deux signaux est représentative de l'information à mesurer. Ainsi, la grandeur à mesurer est directement obtenue par battement entre ces deux ondes optiques et ne nécessite plus ni interféromètre ni capteur de référence. On simplifie ainsi considérablement les architectures de capteurs à fibres optiques, en supprimant les modules interférométriques équipant classiquement les bancs d'interrogation.

Les dispositifs selon l'invention s'appliquent préférentiellement à la réalisation d'hydrophones à fibres optiques mais peuvent être utilisés avec profit pour mesurer diverses grandeurs physiques dans différents domaines techniques. On peut les utiliser en particulier comme capteurs de contrainte dans le domaine aéronautique où ils servent de capteurs de mesures anémo-barométriques. L'information sur la grandeur à mesurer, par exemple la contrainte appliquée sur le capteur est obtenue via la fréquence de battement des deux ondes issues du capteur.

Plus précisément, l'invention a pour objet un capteur à fibre optique de mesure d'une grandeur physique comprenant au moins une fibre optique de mesure comportant au moins un réseau de Bragg et :

- des moyens optiques agencés de façon à injecter à l'intérieur de la fibre une première onde « pompe » à une première fréquence optique et une seconde onde dite « sonde » à une seconde fréquence optique, la seconde fréquence optique étant différente de la première fréquence optique, le réseau de Bragg étant agencé de façon à réfléchir la première et la seconde onde optique, la puissance optique de la première onde étant suffisante pour donner après interaction avec la seconde onde réfléchie par diffusion Brillouin stimulée, une onde dite « Stokes » dont la fréquence est représentative de la grandeur physique à mesurer ;
- des moyens d'analyse de la différence de fréquence entre les deux ondes optiques « pompe » et « Stokes ».

Avantageusement, la différence de fréquence entre la première onde et la deuxième onde est de l'ordre de 10 GHz.

Préférentiellement, la fibre est une fibre en verre à base de chalcogénure ou une fibre en silice dopée au bismuth.

Préférentiellement, le capteur est un capteur de contraintes, la grandeur physique à mesurer étant une contrainte mécanique appliquée sur la fibre et plus spécifiquement, le capteur peut être un hydrophone.

L'invention concerne également un réseau de capteurs à fibre optique ayant au moins une des caractéristiques précédentes. Tous les capteurs sont alors disposés en série sur une même fibre optique et le réseau comporte un démultiplexeur en longueurs d'onde disposé entre ladite fibre et les moyens d'analyse.

L'invention sera mieux comprise et d'autres avantages apparaîtront à la lecture de la description qui va suivre donnée à titre non limitatif et grâce aux figures annexées parmi lesquelles :

La figure 1 représente le synoptique général d'un capteur à fibre optique selon l'invention ;
La figure 2 représente le principe de la diffusion Brillouin stimulée ;
La figure 3 représente un mode de réalisation d'un capteur à fibre optique selon l'invention ;
La figure 4 représente les différentes fréquences des ondes optiques circulant dans la fibre optique du capteur ;
Enfin, la figure 5 représente un réseau de capteurs à fibres optiques selon l'invention.

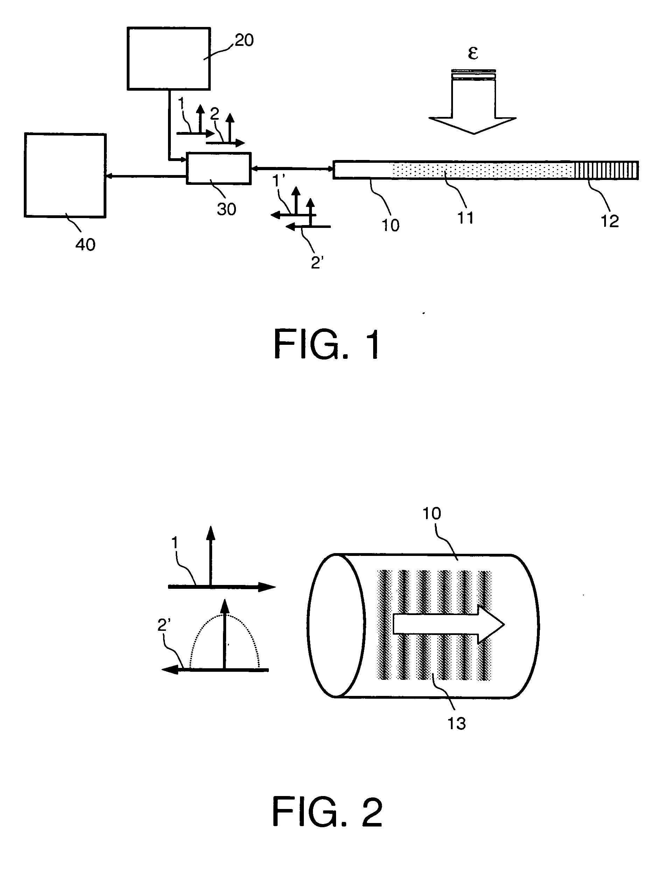

Un capteur selon l'invention est représenté schématiquement en figure 1. Ce capteur comprend:

- une fibre optique 10 de mesure 11 dont les caractéristiques optiques sont sensibles à une grandeur physique $\varepsilon$, la fibre comportant au moins un réseau de Bragg 12 ;
- des moyens optiques 20 agencés de façon à injecter à l'intérieur de la fibre une première onde « pompe » 1 à une première fréquence optique notée $\nu_P(\varepsilon)$ et une seconde onde 2 dite « sonde » à une seconde fréquence optique notée $\nu_{sonde}(\varepsilon)$, la seconde fréquence optique étant différente de la première fréquence optique, le réseau de Bragg étant agencé de façon à réfléchir la première et la seconde onde optique, la puissance optique de la première onde étant suffisante pour donner après interaction avec la seconde onde réfléchie par diffusion Brillouin stimulée, une onde 2' dite « Stokes » dont la fréquence notée $\nu_S(\varepsilon)$ est représentative de la grandeur physique à mesurer ;

• le capteur comporte des moyens de séparation 30 des ondes incidente 1 et 2 et réfléchies 1' et 2' et des moyens d'analyse 40 de la différence de fréquence entre les deux ondes optiques, les deux ondes étant reçues par un photo-détecteur non représenté sur la figure 1.

Le coeur du capteur selon l'invention est un amplificateur Brillouin à fibre injecté. Il est représenté en figure 2. Une onde pompe 1 injectée dans une fibre optique 10 diffuse sur les phonons acoustiques présents à l'équilibre thermique, c'est la diffusion Brillouin spontanée. Lorsque la puissance optique de l'onde pompe injectée est supérieure à un seuil (dépendant de la longueur de fibre, de sa composition, et de la source utilisée), le battement entre l'onde pompe et l'onde rétro-diffusée 2', appelée onde Stokes, amplifie l'onde acoustique, c'est la diffusion Brillouin stimulée. En effet, le battement de ces ondes induit une variation périodique d'intensité du champ électrique total présent dans le milieu. A cette variation périodique de l'intensité du champ électrique est associée, par l'intermédiaire du processus d'électrostriction, une variation périodique de l'indice de réfraction du milieu représentée par le réseau 13. Les deux ondes optiques étant de longueur d'onde légèrement différente, la figure d'interférence à laquelle elles donnent naissance se déplace dans le milieu. La variation de l'indice de réfraction du milieu est donc périodique et mobile, elle peut être assimilée à une onde matérielle de pression. Cette onde acoustique est équivalente à un miroir de Bragg mobile adapté à la longueur d'onde de la pompe qui l'a induit.

La diffusion Brillouin stimulée donne donc lieu à l'inscription, le long de la fibre, d'un réseau d'indice dynamique 13 qui contrairement aux réseaux de Bragg photo-inscrits par des techniques UV standards s'adapte à toute variation lente des conditions environnementales d'utilisation du capteur. Le capteur est donc intrinsèquement insensible aux contraintes statiques. De plus, deux ondes optiques de fréquences distinctes appelées onde pompe et onde Stokes sont issues de ce capteur. L'information sur la grandeur à mesurer, par exemple la contrainte appliquée au capteur est obtenue via la variation de la fréquence de battement des deux ondes issues du capteur. L'utilisation de ce dispositif auto-référencé permet de simplifier l'architecture des systèmes d'hydrophones, par exemple, en supprimant les modules interférométriques équipant classiquement leurs bancs d'interrogation. Un tel dispositif est également bien adapté à la réalisation de microphones pour les mesures de faibles variations de pression subies, par exemple, par les ailes d'avions dues, par exemple, aux perturbations locales autour d'une variation statique forte due à l'altitude de l'appareil. La diffusion Brillouin stimulée dans les fibres optiques est un effet connu et généralement gênant pour les systèmes de transmission de données, mais qui, dans le cas présent, convient parfaitement à la réalisation de capteurs selon l'invention.

Afin de pouvoir utiliser ce dispositif comme capteur de grande sensibilité, les ondes optiques qui en sont issues doivent présenter une grande pureté spectrale. Ainsi, la réalisation d'un laser Brillouin, générant une onde Stokes très fine spectralement est le dispositif idéal. On se reportera sur ce sujet aux articles de S. Norcia, S. Tonda-Goldstein, R. Frey, D. Dolfi and J.-P. Huignard, « Efficient single-mode Brillouin fiber laser for low noise optical carrier reduction of microwave signals », Opt. Lett. Vol. 28, No. 20 (2003) et de S. Norcia, R. Frey, S. Tonda-Goldstein, D. Dolfi and J.-P. Huignard, « Efficient High-efficiency single-frequency Brillouin fiber laser with a tunable coupling coefficient » J. Opt. Soc. Am. B 1 Vol. 21, No. 8 (2004).

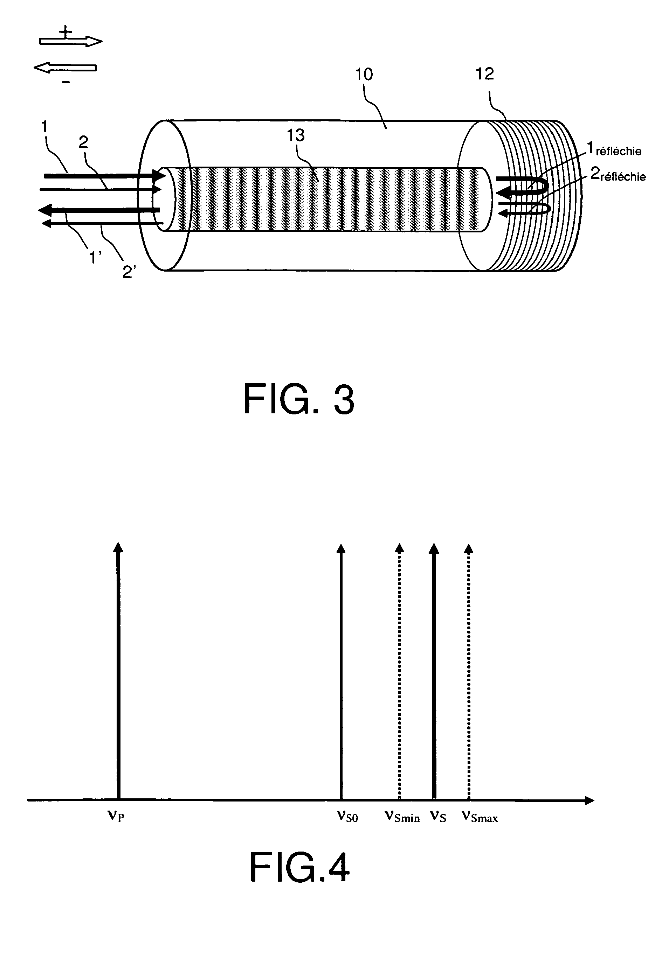

Il existe plusieurs mises en oeuvre possibles de l'effet Brillouin. La figure 3 représente un mode de réalisation possible. Il s'agit d'un amplificateur Brillouin injecté par une sonde. En effet, un simple amplificateur générerait une onde Stokes issue du bruit, de largeur spectrale de l'ordre de 10GHz, correspondant à l'inverse du temps de vie des phonons acoustiques dans une fibre. Cette largeur serait rédhibitoire pour les applications mentionnées ci-dessus. Pour atteindre des largeurs spectrales de l'ordre du kHz, l'injection du dispositif est nécessaire.

La figure 3 représente un tronçon de fibre optique fermé à son extrémité par le miroir de Bragg photo-inscrit 12 pour les ondes pompe et Stokes, qui peut être large bande (la variation de longueur d'onde de Bragg avec les contraintes statiques n'est donc pas problématique). Le composant ainsi constitué est injecté par une onde pompe 1 autour de 1550nm ($\nu_P$, sens +), et une onde sonde 2 ($\nu_{sonde}$, sens +) dont la longueur d'onde est décalée par rapport à la pompe de la fréquence Doppler approximative de la fibre utilisée, soit d'environ $\nu_B \sim 10$GHz. L'interaction entre la pompe incidente 1 (sens +) et la sonde réfléchie $2_{réfléchie}$ par le miroir de Bragg (sens -) donne lieu, par diffusion Brillouin stimulée dans le coeur de la fibre, à une onde Stokes 2' pure (sens -). Le battement $\nu_p - \nu_s$ entre cette onde Stokes (sens -) et la réflexion $1_{réfléchie}$ ou 1' de la pompe sur le miroir de Bragg (sens -) constitue le signal d'intérêt issu du capteur. La fréquence optique de l'onde pompe $\nu_p$ est inchangée par rapport à celle qui a été injectée. On note $\nu_B$ la fréquence de battement égale à $\nu_p - \nu_s$.

La fréquence optique de l'onde Stokes $\nu_s$ dépend, au premier ordre, de la nature de la fibre utilisée, et au deuxième ordre de ses conditions d'utilisation. $\nu_s$ doit par conséquent être ajustée une fois le dispositif en place, pour maximiser la puissance du signal de battement à la fréquence $\nu_B$. Cette fréquence $\nu_B$ est une grandeur aisément mesurable pour chaque type de fibre, et dont l'ordre de grandeur est connu : 11 GHz dans le cas d'une fibre standard ; 8GHz dans le cas d'une fibre en verre chalcogénure. Cet ajustement effectué, le réseau de Bragg inscrit par diffusion Brillouin stimulée peut être utilisé comme un capteur, de contrainte par exemple : il a déjà été démontré expérimentalement que $v_S$ est une fonction de la contrainte. La figure 4 représente les différentes fréquences du capteur, $v_P$ la fréquence de l'onde pompe, $v_{S0}$ la fréquence de l'onde sonde initiale, $v_S$ la fréquence de l'onde sonde adaptée au type de fibre, $v_{Smin}$ et $v_{Smax}$ les fréquences de variation de l'onde Stokes lorsque la fibre est soumise à des variations de contrainte. On se reportera à l'article de M. Nicklès, L. Thévenaz, Ph. Robert, « Brillouin gain spectrum characterization in single-mode optical silica fibers », JLT 15, p.1842-1851 (1997) sur ce sujet.

Ce dispositif est auto-référencé, puisque deux ondes de fréquences optiques différentes en sont issues : la réflexion de l'onde pompe et l'onde Stokes stimulée (décalée vers les grandes longueurs d'onde de la fréquence Doppler). Le fonctionnement de ce dispositif est garanti quelle que soit la pression statique qui lui est appliquée, puisque le réseau de Bragg créé ici s'adapte de façon dynamique aux ondes optiques qui l'inscrivent par effet non linéaire.

De façon plus précise, les deux fréquences optiques $v_P(\varepsilon)$ et $v_S(\varepsilon)$ émises donnent lieu à un battement sur le détecteur à la fréquence $\Delta v(\varepsilon)= v_P(\varepsilon) - v_S(\varepsilon)$, qui peut encore s'écrire $\Delta v(\varepsilon) = v_P - v_S + \delta v(\varepsilon)$. Les deux fréquences optiques $v_P(\varepsilon)$ et $v_S(\varepsilon)$ et la valeur $\Delta v(\varepsilon)$ sont fonctions de la déformation longitudinale $\varepsilon$ vue par la fibre optique du capteur. Par conséquent, cette déformation induit une modulation de la phase du signal d'interférence. En effet, si $E_1$ et $E_2$ sont les champs optiques des ondes aux fréquences $v_P$ et $v_S$, le photo-courant en sortie de détecteur s'écrit :

$$i_{ph}(t) \succ |E_1|^2 + |E_2|^2 + 2|E_1||E_2| \cos[2\pi \times \Delta v \times t]$$

Soit

$$i_{ph}(t) \succ |E_1|^2 + |E_2|^2 + 2|E_1||E_2| \cos[2\pi v_P t - 2\pi v_S t + 2\pi \delta v t]$$

Le signal à traiter apparaît directement comme une modulation de fréquence autour d'une porteuse à la fréquence $v_P - v_S$. Les deux fréquences sont typiquement espacées de $v_P - v_S$ de l'ordre de quelques GHz à quelques dizaines de GHz, ce qui correspond, dans le proche infra-rouge à un écart en longueur d'onde de l'ordre de 0,16 nm. La modulation de phase $\delta v(\varepsilon)$ est obtenue par détection hétérodyne utilisant un oscillateur local de fréquence voisine de $v_1 - v_2$, permettant de translater le signal vers les fréquences basses, plus propices au traitement numérique. L'oscillateur local doit être de pureté spectrale suffisante pour ne pas limiter la mesure du signal $\delta v(\varepsilon)$ dont l'amplitude peut être de l'ordre du mHz. Les synthétiseurs actuellement commercialisés ont une stabilité de l'ordre de $2.10^{-10}$/jour qui est amplement suffisante pour ce type de capteur.

La sensibilité des capteurs présentés ici est à comparer, par exemple, à la grandeur d'intérêt pour les applications hydrophones : le « bruit de mer zéro » (DSS0). Ainsi, le plus petit signal détectable par le capteur doit correspondre à une densité spectrale de bruit en pression de l'ordre de P = 150 $\mu$Pa/$\sqrt{Hz}$ à 1 kHz. La déformation longitudinale correspondant à une pression appliquée de 150$\mu$Pa/$\sqrt{Hz}$ sur une fibre optique est obtenue par la relation :

$$\varepsilon_z = (2\vartheta - 1)P/E$$

où E est le module d'Young et $\vartheta$ le coefficient de Poisson.

Pour la silice, E = $72.10^9$ Pa et $\vartheta$ = 0,23 , ce qui correspond à une valeur de déformation longitudinale égale à $\varepsilon_z = -0,75.10^{-15}/\sqrt{Hz}$ .

Les capteurs à fibre optique sont insérés dans des dispositifs mécaniques spécifiques permettant le transfert optimal de l'onde acoustique en élongation de la cavité, induisant un gain en élongation de l'ordre de 40dB, ce qui équivaut à une pression minimale à détecter de l'ordre de 1 Pa, donc à une déformée longitudinale $\varepsilon_z = -0,75.10^{-11}/\sqrt{Hz}$ . Par conséquent, pour les capteurs présentés dans la suite, il est opportun de calculer le décalage en fréquence des ondes laser émises lorsque la cavité est soumise à cette valeur représentative de déformée longitudinale : $\varepsilon_z \sim -0.75.10^{-11}/\sqrt{Hz}$.

Le dispositif peut être considéré comme un réseau de Bragg dans une fibre optique. Le décalage $\delta\lambda_B$ de la longueur d'onde de Bragg des capteurs à réseaux de Bragg est typiquement :

$$\delta\lambda_B = 2n_e\Lambda\varepsilon_z - 2n_e\Lambda\left[\frac{n_e^2}{2}\left((p_{11} + p_{12})\varepsilon_r + p_{12}\varepsilon_z\right)\right] \qquad\text{(E1)}$$

avec :

- $\varepsilon_z$ et $\varepsilon_r$, les déformations longitudinales et radiales ($\varepsilon_r = \varepsilon_z$ dans l'hypothèse isotrope)
- $n_e$ l'indice de réfraction effectif de la fibre
- $\Lambda = \lambda_B/2n_e$ le pas du réseau
- $p_{11}$ et $p_{12}$ les coefficients élasto-optiques longitudinal et transverse Pour la silice, $n_e = 1{,}456$ , $p_{11} = 0{,}121$ et $p_{12} = 0{,}265$.

De cette relation on déduit le décalage en fréquence du capteur à fibre à réseaux de Bragg dû à une déformation longitudinale statique. Celui-ci est approximativement égal à : $\delta v_1 \approx 0.78\varepsilon_z v_1$. Cette relation est bien vérifiée expérimentalement.

Si l'on admet que cette relation reste valable en dynamique, le décalage en fréquence optique émise par un capteur à réseau de Bragg émettant une onde de fréquence optique $v_1$, soumis à une pression équivalant au bruit de mer zéro, est (à $\lambda \sim 1{,}55\ \mu m$ soit $v_1 \approx 192, 10^{12}$ Hz) :

$$\delta v_1 \approx 0{,}78 \times 0{,}75.10^{-15} \times 192.10^{12} \approx 112 mHz/\sqrt{Hz}$$

Ce qui correspond, en considérant une amplification mécanique de l'ordre de 40dB, (c'est-à-dire à une déformation dynamique longitudinale à mesurer de l'ordre de $10^{-11}/\sqrt{Hz}$ ), à $\delta v_1 \approx 1kHz/\sqrt{Hz}$ .

Le système d'interrogation du capteur doit être capable de mesurer de très faibles décalages de fréquence du laser (de l'ordre de $1kHz/\sqrt{Hz}$ dans le cas explicité ci-dessus) soit la nécessité d'un laser monofréquence à très faible bruit dans la bande de fréquence utile (par exemple acoustique) du capteur.

Certains types de fibres sont particulièrement bien adaptés aux capteurs selon l'invention. Ainsi, les fibres chalcogénure présentent un gain Brillouin de deux ordres de grandeurs supérieurs aux fibres silice standards, et un coefficient élasto-optique (sensibilité à la déformation) vingt fois supérieur à la silice. On entend par fibre chalcogénure une fibre optique composé d'un verre comportant un composé chimique comprenant un chalcogène tel que l'oxygène, le soufre, le sélénium, le tellure ou le polonium. Par conséquent, elles sont d'excellents candidats pour la réalisation de capteurs par diffusion Brillouin stimulée. Les fibres en silice dopées au bismuth font également d'excellents capteurs et elles présentent, de plus, une faible absorption.

Le multiplexage permettant de discriminer les signaux provenant des différents capteurs peut être réalisé par différentes techniques. On citera le multiplexage temporel ou le multiplexage spectral.

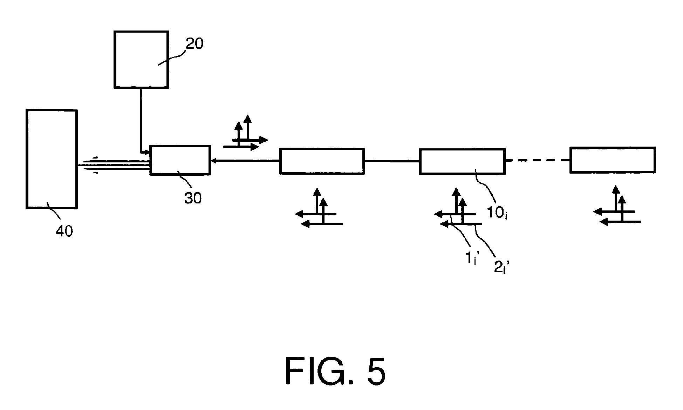

Le multiplexage du dispositif schématisé en figure 5 peut être un multiplexage en longueur d'onde, en utilisant des miroirs de Bragg de longueur d'onde de Bragg espacée de quelques nm d'un capteur au suivant. La source d'interrogation peut être un peigne en fréquence type source télécom. Pour multiplexer plusieurs capteurs i selon l'invention, il est également nécessaire d'ajouter au dispositif de la figure 1, un laser sonde 20 se propageant dans le même sens que la pompe. Ce laser sonde est soit une source large autour de $1{,}5\mu m$, soit une source accordable autour de $1{,}5\mu m$, adaptée à la longueur d'onde de Bragg des miroirs de fond de cavité. Les capteurs peuvent être réalisés selon les modes décrits précédemment. Dans ce cas, chaque capteur i comporte une fibre 10i qui émet deux ondes 1$_i$'et 2$_i$' ayant les fréquences $v_{iP}$ et $v_{iS}$.

## Revendications

1. Capteur à fibre optique de mesure d'une grandeur physique comprenant au moins une fibre optique (10) de mesure comportant au moins un réseau de Bragg (12) ; **caractérisé en ce que** le capteur comporte également :

   • des moyens optiques (20) agencés de façon à injecter à l'intérieur de la fibre une première onde « pompe » à une première fréquence optique et une seconde onde dite « sonde » à une seconde fréquence optique, la seconde fréquence optique étant différente de la première fréquence optique, le réseau de Bragg étant agencé de façon à réfléchir la première et la seconde onde optique, la puissance optique de la première onde étant suffisante pour donner après interaction avec la seconde onde réfléchie par diffusion Brillouin stimulée, une onde dite « Stokes » dont la fréquence est représentative de la grandeur physique à mesurer ;

• des moyens d'analyse (40) de la différence de fréquence entre les deux ondes optiques « pompe » et « Stokes ».

**2.** Capteur à fibre optique selon la revendication 1, caractérisée en en ce que la différence de fréquence entre la première onde et la deuxième onde est de l'ordre de 10 GHz.

**3.** Capteur à fibre optique selon la revendication 1, **caractérisée en ce que** la fibre optique est une fibre en verre à base de chalcogénure ou une fibre optique en silice dopée au bismuth.

**4.** Capteur à fibre optique selon l'une des revendications précédentes, **caractérisé en ce que** le capteur est un capteur de contraintes la grandeur physique à mesurer étant une contrainte mécanique appliquée sur la fibre.

**5.** Capteur à fibre optique selon la revendication 4, **caractérisé en ce que** le capteur est un hydrophone.

**6.** Réseau de capteurs à fibre optique selon l'une des revendications précédentes, **caractérisé en ce que** tous les capteurs sont disposés en série sur une même fibre optique et que le réseau comporte un multiplexeur en longueurs d'onde disposé entre ladite fibre et les moyens d'analyse.

## Patentansprüche

**1.** Lichtwellenleitersensor zum Messen einer physikalischen Größe, der mindestens eine Messlichtwellenleiterfaser (10) umfasst, die mindestens ein Bragg-Netzwerk (12) aufweist, **dadurch gekennzeichnet, dass** der Sensor ebenfalls aufweist:

• optische Mittel (20), die derart ausgebildet sind, dass in die Faser eine erste "Pumpen"-Welle mit einer ersten optischen Frequenz und eine zweite "Sonden"-Welle mit einer zweiten optischen Frequenz eingespeist wird, wobei sich die zweite optische Frequenz von der ersten optischen Frequenz unterscheidet, wobei das Bragg-Netzwerk derart ausgebildet ist, dass die erste und die zweite optische Welle reflektiert werden, wobei die optische Leistung der ersten Welle ausreichend ist, um nach Interaktion mit der zweiten, durch stimulierte Brillouin-Streuung reflektierten Welle eine "Strokes"-Welle zu geben, deren Frequenz für die zu messende physikalische Größe repräsentativ ist,
• Analysemittel (40) der Frequenzdifferenz zwischen den zwei optischen Wellen "Pumpe" und "Stokes".

**2.** Lichtwellenleitersensor nach Anspruch 1, **dadurch gekennzeichnet, dass** die Frequenzdifferenz zwischen der ersten Welle und der zweiten Welle zirka 10 GHz beträgt.

**3.** Lichtwellenleitersensor nach Anspruch 1, **dadurch gekennzeichnet, dass** die Lichtwellenleiterfaser eine Glasfaser auf der Basis von Chalcogenur oder eine Glasfaser aus wismutdotiertem Siliziumoxid ist.

**4.** Lichtwellenleitersensor nach einem der vorangehenden Ansprüche, **dadurch gekennzeichnet, dass** der Sensor ein Spannungssensor ist, wobei die zu messende physikalische Größe eine auf die Faser ausgeübte mechanische Spannung ist.

**5.** Lichtwellenleitersensor nach Anspruch 4, **dadurch gekennzeichnet, dass** der Sensor ein Hydrophon ist.

**6.** Lichtwellenleitersensornetzwerk nach einem der vorangehenden Ansprüche, **dadurch gekennzeichnet, dass** alle Sensoren in Reihe auf einer selben Lichtwellenleiterfaser angeordnet sind und dass das Netzwerk einen Wellenlängenmultiplexer aufweist, der zwischen der Faser und den Analysemitteln angeordnet ist.

## Claims

**1.** An optical fibre sensor for measuring a physical quantity comprising at least one measuring optical fibre (10) comprising at least one Bragg grating (12), **characterised in that** said sensor further comprises:

• optical means (20) arranged so as to inject a first "pump" wave with a first optical frequency and a second "probe" wave with a second optical frequency inside said fibre, said second optical frequency being different from said first optical frequency, said Bragg grating being arranged so as to reflect said first and said second optical wave, with the optical power of said first wave being sufficient to provide, after interaction with said second wave reflected by stimulated Brillouin scattering, a "Stokes" wave, the frequency of which represents the physical quantity to be measured;

• means (40) for analysing the difference in frequency between the two "pump" and "Stokes" optical waves.

2. The optical fibre sensor according to claim 1, **characterised in that** the difference in frequency between said first wave and said second wave is of the order of 10 GHz.

3. The optical fibre sensor according to claim 1, **characterised in that** said optical fibre is a chalcogenide-based glass fibre or a bismuth-doped silica optical fibre.

4. The optical fibre sensor according to any one of the preceding claims, **characterised in that** said sensor is a strain sensor, with the physical quantity to be measured being a mechanical strain applied to said fibre.

5. The optical fibre sensor according to claim 4, **characterised in that** said sensor is a hydrophone.

6. A network of optical fibre sensors according to any one of the preceding claims, **characterised in that** all of the sensors are disposed in series on the same optical fibre, and **in that** said array comprises a wavelength multiplexer disposed between said fibre and said analysis means.

EP 2 307 856 B1

FIG. 1

FIG. 2

9

# FIG. 3

$\nu_P$            $\nu_{S0}$   $\nu_{Smin}$   $\nu_S$   $\nu_{Smax}$

# FIG.4

FIG. 5

## RÉFÉRENCES CITÉES DANS LA DESCRIPTION

**Documents brevets cités dans la description**

- US 8844927 B
- US 5844927 A
- US 6885784 B
- US 6630658 B

**Littérature non-brevet citée dans la description**

- **C. MENADIER ; C.KISSENGER ; H. ADKINS.** The photonic sensor. *Instrum. Control Syst.,* 1967, vol. 40, 114
- **B. CULSHAW.** Optical fiber sensor technologies: opportunities and -perhaps- pitfalls. *J. Ligth. Tech.,* 2004, vol. 22 (1), 39
- **P. NASH.** Review of interferometric optical fiber hydrophone technology. *IEE Proc. Radar Sonar Navig.,* 1996, vol. 143 (3
- **V. VALI ; R. W. SHORTHILL.** Fiber ring interferometer. *Appl. Opt.,* 1976, vol. 15 (5), 1099
- **L. THÉVENAZ et al.** Monitoring of large structures using distributed Brillouin fiber sensing. *proceedings of the 13th international conf on optical fiber sensors (OFS-13), Korea, SPIE,* 1999, vol. 3746, 345
- **S.W. JAMES et al.** « Simultaneous independent temperature and strain measurement using in-fiber Bragg grating sensors. *Elect. Lett.,* 1996, vol. 32 (12), 1133
- **D. KERSEY et al.** Fiber Grating Sensors. *J. Light. Techn.,* 1997, vol. 15, 8
- **J. HILL et al.** DFB fibre-laser sensor developments. *OFS-17 Proc. SPIE,* vol. 5855, 904
- **C. SUN et al.** Serially multiplexed dual-point fiber-optic acoustic emission sensor. *J. Light. Techn.,* 2004, vol. 22 (2
- **S. ABAD et al.** Interrogation of wavelength multiplexed fiber Bragg gratings using spectral filtering and amplitude-to-phase optical conversion. *J. of Ligth. Techn.,* 2003, vol. 21 (1
- **KUMAR et al.** Studies on a few-mode fiber-optic strain sensor based on LP01-LP02 mode interference. *J. Ligth. Techn.,* 2001, vol. 19 (3
- **P.E. BAGNOLI et al.** Development of an erbium-doped fibre laser as a deep-sea hydrophone. *J. of Optics A : Pure Appl. Opt.,* 2006, 8
- **D.J. HILL et al.** A fiber laser hydrophone array. *SPIE Conf on Fiber Optic Sensor Technology and Applications,* 1999, vol. 3860, 55
- **S. FOSTER et al.** Ultra thin fiber laser hydrophone research through government-industry collaboration. *OFS,* 2005
- **S. NORCIA ; S. TONDA-GOLDSTEIN ; R. FREY ; D. DOLFI ; J.-P. HUIGNARD.** Efficient single-mode Brillouin fiber laser for low noise optical carrier reduction of microwave signals. *Opt. Lett.,* 2003, vol. 28 (20
- **S. NORCIA ; R. FREY ; S. TONDA-GOLDSTEIN ; D. DOLFI ; J.-P. HUIGNARD.** Efficient High-efficiency single-frequency Brillouin fiber laser with a tunable coupling coefficient. *J. Opt. Soc. Am. B 1,* 2004, vol. 21 (8
- **M. NICKLÈS ; L. THÉVENAZ ; PH. ROBERT.** Brillouin gain spectrum characterization in single-mode optical silica fibers. *JLT,* 1997, vol. 15, 1842-1851